Europäisches Patentamt

**European Patent Office**

Office européen des brevets

(11) Numéro de publication: **0 146 457**
**B1**

(12) **FASCICULE DE BREVET EUROPEEN**

(45) Date de publication du fascicule du brevet:
**17.02.88**

(21) Numéro de dépôt: **84402476.0**

(22) Date de dépôt: **03.12.84**

(51) Int. Cl.⁴: **C 04 B 35/04, C 21 B 7/14**

(54) Compositions réfractaires non façonnées à base de grains d'oxydes basiques fondus et coulés, et articles réfractaires fabriqués à partir de ces compositions.

(30) Priorité: **19.12.83 FR 8320270**

(43) Date de publication de la demande:
**26.06.85 Bulletin 85/26**

(45) Mention de la délivrance du brevet:
**17.02.88 Bulletin 88/7**

(84) Etats contractants désignés:
**AT BE DE FR GB IT LU NL**

(56) Documents cités:
**EP - A - 0 021 936**
**BE - A - 857 023**
**FR - A - 2 523 572**

**CHEMICAL ABSTRACTS, vol. 84, no. 26, 28 juin 1976,
page 253, résumé no. 184118h, Columbus, Ohio, US
CHEMICAL ABSTRACTS, vol. 94, no. 20, mai 1981, page
294, résumé no. 161448h, Columbus, Ohio, US**

(73) Titulaire: **SOCIETE EUROPEENNE DES PRODUITS
REFRACTAIRES, Les Miroirs 18, Avenue d'Alsace,
F-92400 Courbevoie (FR)**

(72) Inventeur: **Guigonis, Jacques, Quartier Les Hautures,
F-84320 Entraigues sur Sorgues (FR)**
Inventeur: **Rech, Jean, 1, Rue de la Vieille Poste,
F-84000 Avignon (FR)**
Inventeur: **Bert, Christophe, Allée des Amandiers,
F-84800 l'Isle sur la Sorgue (FR)**

(74) Mandataire: **de Boisse, Louis et al, CABINET DE
BOISSE 37, Avenue Franklin D. Roosevelt, F-75008 Paris
(FR)**

ACTORUM AG

## Description

L'invention concerne des compositions réfractaires non façonnées à base de grains d'oxydes basiques fondus et coulés qui sont utiles comme compositions à mouler pour la réalisation d'articles ou pièces réfractaires destinés à la coulée ou au traitement de métaux, ainsi que les articles ou pièces réfractaires crus ou cuits formés à partir de ces compositions.

La fabrication d'acier dans des fours électriques est une pratique courante en sidérurgie. Cette voie d'élaboration est en expansion et l'on demande de plus en plus de productivité à ces fours. Le transvasement de l'acier du four électrique vers les poches se fait généralement au travers d'un chenal de coulée. Cette pièce est soumise à des phénomènes d'érosion-corrosion par l'acier liquide à 1650–1750 °C, à des sollicitations thermomécaniques du type cyclage thermique par suite du passage intermittent de l'acier liquide pendant la coulée. De plus, dans certaines pratiques, on fait passer dans le chenal de coulée de l'acier mais aussi le laitier, ce qui accentue les phénomènes de corrosion du réfractaire qui le constitue. Le chenal de coulée doit donc supporter des conditions sévères d'utilisation. Une pratique courante est de réparer le chenal de coulée entre chaque coulée de l'acier par des pisés alumineux ou magnésiens. Cette pratique exige des conditions de travail difficiles, amène une consommation de réfractaire par tonne d'acier élevée (~0,5 à 1 kg/tonne d'acier liquide coulée), risque d'introduire des inclusions dans l'acier par suite d'une mauvaise liaison entre le réfractaire usagé et le matériau de réparation et constitue une contrainte supplémentaire pour les aciéristes qui veulent augmenter leur productivité et réduire le temps de réparation.

Dans la pratique actuelle, il existe trois types principaux de chenaux de coulée, à savoir:

– Les chenaux formés sur place par un assemblage de briques réfractaires, en général magnésiennes, recouvertes du côté exposé au métal par un enduit; ils constituent environ 40% des chenaux utilisés. De tels chenaux sont entretenus par les moyens classiques bien connus et notamment par projection.

Une amélioration des performances de ce type de chenaux consiste à utiliser des briques à base de magnésie, de magnésie goudronnée ou plus récemment à base de magnésie-carbone (par exemple MgO $\sim$ 85–90%; SiO$_2$ $\sim$ 0,5–1% et C $\sim$ 9–10%). Dans tous les cas, la durée de vie ne dépasse pas 200 coulées.

Ce type de chenaux présente cinq inconvénients majeurs:

– temps de montage long (brique à brique)
– coût élévé
– durabilité faible
– nécessité d'un entretien fréquent
– infiltrations fréquentes de l'acier dues à la présence de nombreux joints.

– Les chenaux formés sur place à l'aide de masses plastiques à damer; notamment les chenaux formés à l'aide de produit alumineux à liant phosphaté. Ces produits ont l'avantage de permettre une réalisation rapide sur le site et d'être utilisables très rapidement. Mais de tels chenaux nécessitent un entretien régulier et important. Ainsi par exemple, pour un four électrique de 100 tonnes, de tels chenaux de coulée nécessitent un entretien toutes les 10 coulées avec un produit magnésien et on arrive dans le meilleur des cas à atteindre 150 à 180 coulées avec ces matériaux, soit environ 0,80 kg de réfractaire usé par tonne d'acier coulé.

– les chenaux formés sur place à l'aide de compositions réfractaires non façonnées. On utilise pour cela:

– soit des produits du type alumine tabulaire à liant hydraulique du type aluminate de calcium, avec parfois des additifs carbonés du type carbone ou carbure de silicium;

– soit des produits à base d'alumine, carbone, carbure de silicium du type Al$_2$O$_3$ $\sim$ 74–75%, SiO $\sim$ 10–20% et C $\sim$ 8–10%. Dans tous les cas, la durée de vie ne dépasse pas 200 coulées.

La réalisation de chenaux de coulée avec ces compositions présente les inconvénients suivants:

– nécessité de disposer de moyens de réalisation sur le site,

– durée de fabrication,

– nécessité d'attendre avant utilisation (séchage),

– la qualité dépend du personnel qui prépare le produit (hétérogénéité),

– et dans le cas des produits d'alumines carbonés: oxydation à l'air, carburation partielle de l'acier et introduction d'inclusions d'alumine.

Pour remédier aux quatre premiers inconvénients, les utilisateurs font de plus en plus appel à des sociétés spécialisées, qui livrent un produit façonné à base de ces compositions, mais sous forme de pièces préformées prêtes à l'emploi; mais les pièces obtenues ont malgré tout les défauts liés à leur composition:

– faible durabilité (maximum de 200 coulées),

– nécessité d'un entretien fréquent,

– dans le cas des produits à base d'alumine tabulaire, pollution du métal par des inclusions d'alumine,

– dans le cas des produits carbonés, carburation du métal (acier liquide).

L'invention a pour but de fournir une composition réfractaire non façonnée utile pour la fabrication d'articles ou pièces réfractaires destinés à la coulée ou au traitement de métaux ayant une longévité en service supérieure.

L'invention a notamment pour but de fournir une composition réfractaire non façonnée qui permet de fabriquer un chenal de coulée de l'acier capable d'atteindre, par exemple dans le cas d'un four de 100 tonnes, au moins 200 coulées sans réparation intermédiaire avec une consommation de réfractaire inférieure à environ 0,4 kg/tonne d'acier liquide coulée, qui est non carburante et non polluante et qui permet la réalisation de pièces préformées utilisables sans attente.

L'invention a enfin pour but de fournir des articles ou pièces réfractaires, fabriqués à partir de la composition de l'invention qui présentent le meilleur compromis actuel en égard à la résistance à l'érosion et à la corrosion par les métaux fondus et le laitier, la résistance à la fracturation thermique, et la résistance à l'écaillage.

L'invention concerne une composition réfractaire non façonnée, caractérisée en ce qu'elle comprend, en poids:

a) 49 à 99% de particules d'une grosseur de 0,2 µm à 20 mm d'un matériau réfractaire fondu et coulé dont la composition chimique en poids est la suivante: 45–78% MgO, 0–30% Cr$_2$O$_3$, 0–35% Al$_2$O$_3$, 0–17% FeO et/ou Fe$_2$O$_3$, avec au moins 82% de MgO + Cr$_2$O$_3$ + Al$_2$O$_3$ + FeO + Fe$_2$O$_3$, 1–8% SiO$_2$, 0–2% CaO + BaO + SrO, 0–10% TiO$_2$, 0–3% fluor, avec la condition que la quantité de particules d'une grosseur inférieure à 45 µm n'exède pas 30% en poids,

b) 0,5 à 5% d'un liant hydraulique,

c) 0,5 à 15% de particules sphériques choisies dans le groupe constitué par (i) jusqu'à 5% de silice vitreuse, dont au moins 80% des particules ont une grosseur supérieure à 0,2 µm et au moins 95% des particules ont une grosseur inférieure à 10 µm, (ii) jusqu'à 15% d'oxyde de chrome Cr$_2$O$_3$ dont au moins 80% des particules ont une grosseur supérieure à 0,2 µm et au moins 95% des particules ont une grosseur inférieure à 10 µm et (iii) les mélanges de ceux-ci.

d) 0 à 50% de grains choisis parmi la chromite, la magnésie et leurs mélanges, la grosseur de ces grains étant comprise entre 10 µm et 2 mm.

e) 0,01 à 1% d'un agent tensio-actif par rapport au poids total des constituants (a) à (d), et

f) 0 à 4% d'agrafes métalliques par rapport au poids total des constituants (a) à (d).

Le constituant (a) forme 49 à 99%, de préférence 86 à 95%, en poids de la composition de l'invention. Les particules de constituant (a) ont des grosseurs comprises entre 0,2 µm et 20 mm, mais il faut que la quantité de particules d'une grosseur inférieure à 45 µm n'excède pas 30% de préférence 20%, car une quantité excessive de fines est préjudiciable à la qualité du produit final, pouvant causer des fissures dans ce dernier.

Comme exemple de constituant (a) utilisable, on peut citer la famille de produits décrits dans US-A-4 107 255 présentant la composition chimique en poids suivante:

| | | |
|---|---|---|
| MgO | : | 45–78% |
| Cr$_2$O$_3$ | : | 0–30% |
| Al$_2$O$_3$ | : | 0–35% |
| FeO + Fe$_2$O$_3$ | : | 0–17% |
| SiO$_2$ | : | 1– 8% |
| CaO + BaO + SrO | : | 0– 2% |
| TiO$_2$ | : | 0–10% |
| fluor | : | 0– 3%, |

la somme MgO + Cr$_2$O$_3$ + Al$_2$O$_3$ + FeO + Fe$_2$O$_3$ étant au moins de 82%.

Un exemple particulier de ces produits, fabriqué et vendu par la demanderesse sous la dénomination commerciale CORHART 104, présente la composition chimique suivante:

| | | |
|---|---|---|
| MgO | : | 56 % |
| Cr$_2$O$_3$ | : | 20,3% |
| FeO | : | 12,4% |
| SiO$_2$ | : | 2,4% |
| CaO | : | 1,3% |
| Al$_2$O$_3$ | : | 7,2%. |

On a trouvé commode de disposer de plusieurs classes granulométriques du constituant (a). Sans que les limites indiquées ci-après soient limitatives, on peut distinguer:

1) les gros grains (grosseurs de 5 à 20 mm environ)

| Ouverture des tamis | Refus sur chaque tamis % poids | |
|---|---|---|
| en µm | maxi | mini |
| 16 000 | 15 | 3 |
| 9 500 | 60 | 30 |
| 4 750 | 61 | 31 |
| 2 000 | 10 | ~1 |

2) les grains (grosseurs de 2 à 5 mm environ)

| Ouverture des tamis | Refus sur chaque tamis % poids | |
|---|---|---|
| en µm | maxi | mini |
| 4 750 | 5 | ~1 |
| 4 000 | 12 | 2 |
| 3 350 | 30 | 10 |
| 2 000 | 72 | 42 |

3) la grainette (grosseurs de 0,5 à 2 mm environ)

| Ouverture des tamis | Refus sur chaque tamis % en poids | |
|---|---|---|
| en µm | mini | maxi |
| 2 000 | ~1 | 4 |
| 1 700 | 2 | 12 |
| 850 | 42 | 62 |
| 425 | 26 | 56 |

4) la farine (grosseurs de 45 µm à 0,5 mm environ)

| Ouverture des tamis | Refus sur chaque tamis % en poids | |
|---|---|---|
| en µm | mini | maxi |
| 425 | 2 | 12 |
| 300 | 5 | 15 |
| 106 | 30 | 50 |
| 45 | 23 | 43 |
| inférieur à 45 µm | 4 | 25 |

5) les fines (grosseurs de 0,2 à 45 μm environ)

| Diamètre des particules en μm | Pourcentage cumulé en poids | |
|---|---|---|
| | mini | maxi |
| supérieur à: 100 μm | 0 | 2 |
| > 45 μm | 1 | 15 |
| > 20 μm | 10 | 45 |
| > 10 μm | 30 | 70 |
| > 5 μm | 45 | 80 |
| > 1 μm | 70 | 90 |
| > 0,5 μm | 80 | 95 |

toutes ces classes granulométriques peuvent être préparées par broyage et tamisage.

Le constituant (b) forme 0,5 à 5% en poids de la composition, de préférence 3–4% en poids. Le liant hydraulique (b) peut être, par exemple, un ciment alumineux du type aluminate de chaux, ou du type aluminate de baryum ou du type aluminate de strontium, ou du type silico-aluminate de calcium. On préfère utiliser un ciment super-alumineux, tel que le ciment ALCOA® CA 25 ou similaire. En dessous de 0,5% de constituant (b), il n'y a pas assez de liant pour assurer une prise satisfaisante de la composition et au-dessus de 5% en poids, il y a un risque que le liant réagisse avec les autres constituants avec formation de spinelle, ce qui provoque un gonflement indésirable du produit à l'utilisation.

Le constituant (c) forme 0,5 à 15% en poids de la composition, de préférence 1 à 10%. En dessous de 0,5%, le rôle du constituant (c) devient insignifiant. Au-dessus de 15% en poids, il risque d'y avoir trop de fines dans la composition et que les besoins en eau de mise en œuvre augmentent. Ceci fait qu'il se produit un retrait important au séchage et, par suite, des fissures dans le produit final. Le constituant (c) est formé de particules très fines choisies parmi la silice, l'oxyde de chrome et les mélanges de ces deux oxydes. Dans le cas où l'on utilise de la silice, cette dernière ne dépassera pas 5% en poids car au-delà on observe une chute de la résistance à la corrosion. La silice est sous forme de particules sphériques de silice vitreuse, dont au moins 80% ont une grosseur supérieure à 0,2 μm et dont au moins 95% ont une grosseur inférieure à 10 μm, appelées également «fumée de silice», et a une teneur en $SiO_2$ d'au moins 98%. La silice améliore les propriétés mécaniques du produit final aux températures intermédiaires, c'est-à-dire n'excédant par 1200 °C.

L'oxyde de chrome est un oxyde de chrome pigmentaire, dont au moins 80% des particules ont une grosseur supérieure à 0,2 μm et dont au moins 95% des particules ont une grosseur inférieure à 10 μm, et a une teneur en $Cr_2O_3$ d'au moins 98%. L'incorporation de $Cr_2O_3$ améliore la résistance à la corrosion du produit final.

Pour effectuer les analyses granulométriques des fumées de silice et de l'oxyde de chrome employés dans l'invention, on a utilisé un appareil Sédigraph 5000 D commercialisé par la Société COULTRONICS France SA et une cuve à ultra-sons commercialisée par la Société ANNE MASSE type 75. T.

On a préparé une solution d'eau distillée contenant 0,1% d'hexamétaphosphate de sodium à la température de 30 °C dont on a prélevé 50 cm³ que l'on a introduit dans un bécher contenant par exemple 4 g de silice (ou 1 g d'oxyde de chrome). On a effectué la dispersion en plaçant ce bécher dans la cuve à ultra-sons pendant 2 minutes; la température étant soigneusement réglée, de préférence à 30 °C. C'est sur la dispersion résultante qu'est effectuée l'analyse à l'aide du Sédigraph 5000 D.

Le constituant (d) est optionnel et forme 0 à 50% en poids de la composition. Il est composé de 0 à 30% en poids de grains de magnésie et/ou de 0 à 20% en poids de grains de chromite, le total grains de magnésie + grains de chromite forme 0 à 50% en poids de la composition.

Comme magnésie, on peut utiliser, par exemple, une magnésie d'eau de mer calcinée à haute température et de bonne pureté dont la composition chimique est la suivante: 93,3% MgO, 1,8% CaO, 2,1% $SiO_2$, 1,6% FeO, 1% $Al_2O_3$. La grosseur des grains (d) est comprise entre 10 μm et 2 mm, de préférence entre 45 et 2000 μm. Un exemple typique de grains de magnésie utilisables a la distribution granulométrique suivante:

| Ouverture des tamis en μm | Refus sur chaque tamis % en poids | |
|---|---|---|
| | mini | maxi |
| 2 000 | 1 | 10 |
| 1 600 | 5 | 15 |
| 850 | 40 | 60 |
| 106 | 15 | 25 |
| inférieure à 45 μm | 1 | 5 |

Comme chromite, on peut utiliser, par exemple, une chromite du Transvaal dont la composition chimique est la suivante: 45,5% $Cr_2O_3$, 0,4% CaO, 10,8% MgO, 25% FeO, 15,7% $Al_2O_3$, 2,6% $SiO_2$. La grosseur des grains est comprise entre 10 μm et 2 mm, de préférence entre 45 et 2000 μm.

Un exemple typique de grains de chromite utilisables a la distribution granulométrique suivante:

| Ouverture des tamis en μm | Refus sur chaque tamis % en poids | |
|---|---|---|
| | mini | maxi |
| 2 000 | 0 | 1 |
| 1 600 | 0 | 5 |
| 850 | 5 | 25 |
| 425 | 15 | 35 |
| 106 | 35 | 55 |
| inférieure à 45 μm | 1 | 5 |

Le constituant (d) est utilisé lorsqu'on désire obtenir un produit un peu plus économique.

Le constituant (e) est présent à raison de 0,01 à 1% par rapport au poids des constituants (a) à . (d), il est constitué par un agent tensio-actif à propriétés dispersantes qui permet de couler facilement la composition avec une quantité minimum d'eau, on peut utiliser, à titre d'exemples non limitatifs, un polynaphtalène sulfonate de sodium ou un polyacrylate de sodium. De nombreux dispersants sont disponibles dans le commerce.

Le constituant (f) est présent à raison de 0 à 4%, de préférence à raison de 1 à 3% par rapport au poids des constituants (a) à (d). On ne peut pratiquement pas dépasser 4% d'agrafes en raison de difficultés d'incorporation dans la composition. Il est constitué, par exemple, par des agrafes métalliques en acier réfractaire. De telles agrafes sont vendues dans le commerce sous la marque déposée DRAMIX® par la société BEKAERT dans deux qualités d'acier réfractaire AISI 302 et AISI 314 et dans diverses tailles. Ces agrafes sont munies aux deux extrémités de crochets pour permettre un meilleur accrochage avec la matrice céramique, elles ont une longueur comprise entre 30 et 60 mm et un diamètre compris entre 0,4 et 0,6 mm. De préférence, on utilise 2% d'agrafes DRAMIX® ZP 30/0,40 AISI 302. Ces agrafes améliorent la résistance à l'écaillage et les propriétés mécaniques aux températures intermédiaires surtout lorsque les pièces sont soumises à de forts gradients thermiques.

En effet, la liaison hydraulique du matériau de l'invention se dégrade entre 600–800 °C et le frittage des grains n'apparaît que vers 1200 °C. Le rôle de ces agrafes est donc d'améliorer la résistance mécanique des produits dans cet intervalle de températures. De cette façon, la résistance mécanique est assurée de la température ambiante jusqu'à 1600 °C environ.

Pour mettre en œuvre les compositions, on les mélange intimement avec une quantité d'eau comprise entre 3 et 6%, de préférence entre 4 et 5% en poids par rapport au poids des constituants (a) à (f). En variante, lorsqu'on désire améliorer les propriétés mécaniques des articles de l'invention aux températures inférieures à 1300 °C, c'est-à-dire avant qu'un frittage substantiel ne se soit produit, on peut remplacer l'eau, en partie ou en totalité par une solution aqueuse de silicate de soude. Dans le cas d'une solution aqueuse à 30% en poids de silicate de soude, on peut utiliser de 0 à 6% en poids de cette solution par rapport au poids total des constituants (a) à (f). Un exemple typique de solution aqueuse de silicate de soude a la composition chimique suivante: $SiO_2 = 17,2\%$, $Na_2O = 13,7\%$, $ZrO_2 = 1\%$, $Al_2O_3 + Fe_2O_3 + TiO_2 = 0,5\%$.

Dans le cas où l'on incorpore des agrafes métalliques (f) dans la composition, il est commode de mélanger d'abord environ la moitié des constituants (a) et (d) éventuel avec la totalité des constituants (b), (c), (e) et la totalité de l'eau ou de la solution de silicate de soude de mise en œuvre de façon à obtenir un mélange bien fluide, d'ajouter alors les agrafes à cè mélange et de les y répartir sensiblement uniformément, puis enfin d'incorporer le reste des constituants (a) et (d) éventuel en mélangeant bien.

Les compositions préparées peuvent être mises à des formes simples ou compliquées par diverses techniques classiques, par exemple par coulage dans des moules avec application de vibrations, par vibrage-pressage ou par centrifugation horizontale, entre autres. On laisse ensuite durcir les pièces, puis on les chauffe à une température supérieure à 120 °C pendant le temps nécessaire pour éliminer l'eau. La durée de chauffage nécessaire variera avec le volume et la forme de la pièce, mais de simples essais de routine permettront à l'homme de l'art de déterminer la durée minimale de chauffage adéquate dans chaque cas particulier. Cette étape de séchage est nécessaire pour éviter une fracturation des pièces lors d'un chauffage subséquent à haute température.

Les pièces séchées peut être utilisées telles quelles, auquel cas elles subiront un frittage en service, ou bien on peut les soumettre à une étape de frittage à haute température, par exemple entre 1300 et 1700 °C, avant de les utiliser.

Les compositions sont utiles pour fabriquer des pièces de toutes tailles. La masse de ces pièces peut être importante et atteindre et dépasser les 2 tonnes dans le cas de la fabrication des chenaux de coulée pour four électrique. La mise en œuvre des compositions permet d'incorporer dans la masse de la pièce du chenal de coulée des organes de manutention métallique qui facilitent le montage et le démontage du chenal. En effet, la facilité de façonnage de ces compositions permet d'incorporer dans leur masse, mais de préférence à proximité de la surface des pièces préfabriquées, des arceaux métalliques de manutention munis de trous ou d'encoches à leur partie supérieure afin de faciliter l'accrochage par un appareil de levage, le nombre des arceaux dépend évidemment de la longueur de la pièce. La mise en place de pièces monolithiques de fort volume et de grande longueur est ainsi très rapide, aisée et instantanée.

Dans le cas de la fabrication de chenaux de coulée pour fours électriques, l'incorporation d'agrafes métalliques (f) est hautement recommandée pour l'obtention d'un comportement optimal.

Outre les chenaux de coulée, on a trouvé que la composition de l'invention est utile pour réaliser les trous de coulée d'installations de coulée de l'acier, et les lances d'insufflation, les écarteurs à laitier, les briques de siège et les trompes des dégazeurs de poches de traitement de l'acier.

Les exemples non limitatifs ci-après sont donnés en vue d'illustrer l'invention:

Exemple 1

On prépare la composition «B» donnée dans le tableau N° 1 pour réaliser des chenaux de coulée de four électrique à tester comparativement à des chenaux de l'art antérieur. La mise en forme des compositions se fait par coulage – vibration. Après durcissement, on sèche les pièces pendant envirion 2 jours à une température supérieure à 120 °C pour éliminer l'eau.

a) les pièces d'un premier chenal sont montées sur un four électrique de 30 tonnes, puissance ~. 26 MVA réalisant environ 8 coulées par jour d'un acier inoxydable à 1750 °C.

– chenal de la composition «B» tableau N° 1 de l'invention: 220 coulées sans réparation (entretien) avec une consommation correspondant à 0,35 kg de réfractaire par tonne d'acier liquide coulé.

– chenal en produit alumineux à liant phosphaté: 200 coulées avec des réparations (entretien) fréquentes correspondant à une consommation de 0,750 kg de réfractaire par tonne d'acier liquide coulé.

b) les pièces d'un deuxième chenal sont montées sur un four électrique de 90 tonnes, puissance ~ 45 MVA réalisant environ 12 coulées par jour d'un acier faiblement allié pour tubes à 1700–1720 °C.

– chenal de la composition «B» tableau N° 1 de l'invention: 280 coulées sans réparation (entretien) avec une consommation correspondant à 0,12 kg de réfractaire par tonne d'acier coulé.

– chenal en briques de magnésie à 99% de MgO et en briques de magnésie-carbone à 9–10% de carbone: 130 coulées avec quelques réparations correspondant à une consommation de 0,34 kg de réfractaire par tonne d'acier liquide.

c) les pièces d'un troisième chenal sont montées sur un four électrique de 180 tonnes, puissance 106 MVA élaborant de l'acier de construction et de l'acier au silicium avec une température de coulée de 1700 °C, le chenal de la composition «B» tableau N° 1 de l'invention, a permis d'atteindre une performance de 0,140 kg de réfractaire par tonne d'acier liquide.

d) les pièces d'un chenal de la composition «B» du tableau N° 1 de l'invention, montées sur un four électrique de 65 tonnes, puissance 40 MVA élaborant de l'acier pour ronds à béton avec une température de coulée de 1650 °C, ont permis de fabriquer 30 000 tonnes d'acier sans entretien, soit environ 460 coulées et une consommation de 0,083 kg de réfractaire à la tonne d'acier coulé.

Exemple 2

La composition C, donnée dans le tableau N° 1, est recommandée pour réaliser des chenaux de coulée lorsque dans le chenal de coulée il passe non seulement de l'acier liquide, mais également du laitier de four électrique. En effet, les consommations de réfractaire à la tonne d'acier coulé avec la composition «B» donnée dans le tableau N° 1 sont plus élevées dans le cas où l'on fait passer du laitier et de l'acier dans le chenal de coulée. Il convient alors d'améliorer la résistance à la corrosion par le laitier par un ajout d'oxyde de chrome. L'essai de corrosion est une simulation qui consiste à mesurer la profondeur corrodée au niveau de l'interface laitier-air-réfractaire sur des éprouvettes parallélépipédiques à section droite trapézoïdale (hauteur: 100 mm, clavage 85/40 mm) fermant la cuve d'un petit four tournant rempli d'un laitier sidérurgique de composition pondérale: 50% $CaO$, 10% $SiO_2$, 25% $Al_2O_3$, 5% $FeO$, 10% $CaF_2$ à 1680 °C pendant 6 heures. On utilise, à titre de témoin, une éprouvette en produit réfractaire magnésie-chrome conventionnel fabriqué par la demanderesse, obtenu par fusion et coulage de la composition en masse, broyage de cette masse, agglomération et frittage par cuisson à 1615 °C, dont la composition chimique est la suivante: 55% $MgO$, 20% $Cr_2O_3$, 12% $FeO$, 8% $Al_2O_3$, 2,8% $SiO_2$, 1,2% $CaO$ et la masse volumique apparente est de 3,30 $T/m^3$.

Les résultats obtenus sont les suivants sur des échantillons de compositions A, C et produit alumineux classique prélevés dans des pièces de forme parallélépipédique façonnées selon l'exemple 1, et étuvées à 400 °C avant essai.

| | Eprouvettes témoin | A | C | Produit (*) alumineux |
|---|---|---|---|---|
| Profondeur corrodée en mm | 5,24 | 13,65 | 10,40 | 32,75 |
| Indice de corrosion en % | 100 | 38 | 50 | 16 |
| Masse volumique apparente en T/m³ | 3,30 | 3,20 | 3,20 | 2,80 |
| Température de cuisson avant essai en °C | 1615 | 400 | 400 | 400 |

(*) Produit alumineux conventionnel à liant hydraulique dont la composition chimique est de 95% en $Al_2O_3$.

Dans la pratique industrielle avec un chenal de coulée de la composition «B» tableau N° 1, sur un four électrique de 85 tonnes, puissance ~ 46 MVA élaborant des aciers spéciaux, nous avons pu atteindre 147 coulées, avec des réparations intermédiaires. A chaque coulée, il y avait un passage de l'acier, mais également du laitier de 2ème affinage. Dans des conditions similaires, le produit façonné avec la composition «C» du tableau N° 1 mais avec ajout de 2% en poids d'agrafes, a donné environ 150 coulées sans réparation.

Exemple 3

Afin de diminuer le coût de la composition pour des raisons économiques, on peut remplacer une partie des grains électrofondus (a) par un mélange de grains de magnésie et de chromite. On prépare alors une éprouvette à partir de la composition «G» donnée dans le tableau N° 1 par ajout d'eau potable, coulage et vibration de cette dernière dans des moules appropriés. Ce matériau présente une masse volumique apparente plus faible que le produit façonné avec la composition «A» et, dans l'essai de corrosion par laitier décrit dans l'exemple 2, il présente un indice à la corrosion inférieur d'environ 25% à la composition «A».

Exemple 4

On prépare les compositions «A», «E» et «F» du tableau N° 1, puis, après ajout de la quantité d'eau potable indiquée, on fabrique par vibrage-pressage, ou par coulage et vibration, ou par centrifugation horizontale des articles réfractaires qui, après cuisson à une température de 1615 °C, présentent des propriétés physiques comparables au produit servant d'éprouvette-témoin donné dans l'exemple 2 fabriqué par pressage mécanique, et une résistance à la corrosion par les laitiers équivalents ou améliorée (compositions E et F). Ces pièces peuvent être utilisées en ligne de laitier de poche d'affinage secondaire ou dans des gorges de dégazeur.

Exemple 5

On prépare la composition «D» du tableau N° 1. Cette composition présente un pourçentage plus important de gros grains, une quantité de silice vitreuse plus importante et une meilleure résistance à la compression. Après ajout de 4,4% d'eau potable, on fabrique par coulage des articles réfractaires qui sont utiles dans les fours à réchauffer produisant des aciers au silicium où il y a des agents agressifs du type fayalite.

Exemple 6

On prépare la composition «H» du tableau N° 1. On y ajoute 5,2% d'une solution de silicate de soude à 30% en remplacement de l'eau. Cette solution de silicate de soude à la composition chimique suivante: $SiO_2 = 17,2\%$ – $Na_2O = 13,7\%$ – $ZrO_2 = 1\%$ – $Al_2O_3 + Fe_2O_3 + TiO_2 = 0,5\%$, rapport $SiO_2/Na_2O = 1,26$, masse volumique d'environ 1,3 $T/m^3$, viscosité à 25 °C de 10 à 15 centipoises. On fabrique par coulage des articles réfractaires qui ont des propriétés mécaniques améliorées à des températures inférieures à 1300 °C environ.

Tableau I

| Constituants de la composition | Composition % en poids | | | | | | | |
|---|---|---|---|---|---|---|---|---|
| | A | B | C | D | E | F | G | H |
| Gros grains 5–20 mm du produit n° 1 | 15 | 15 | 15 | 47 | – | – | 13 | 15 |
| Grains 2–5 mm du produit n° 1 | 23 | 23 | 23 | 10 | 40 | 40 | 20 | 23 |
| Grainette 0,5–2 mm du produit n° 1 | 26 | 26 | 26 | 13 | 20 | 20 | – | 26 |
| Farine 45 μm–0,5 mm du produit n° 1 | 20 | 20 | 20 | 16 | 21 | 21 | 5 | 20 |
| Fines inférieures à 45 μm | 11 | 11 | 8 | 5 | 11 | 5 | 11 | 11 |
| Grains de magnésie (45–2000 μm) | – | – | – | – | – | – | 26 | – |
| Grains de chromite (45–2000 μm) | – | – | – | – | – | – | 20 | – |
| Silice vitreuse (0,2–10 μm) | 1 | 1 | 1 | 5 | 1 | – | 1 | 1 |
| Oxyde de chrome à 98% (0,2–10 μm) | – | – | 3 | – | 3 | 10 | – | – |
| Ciment alumineux ALCOA® CA 25 | 4 | 4 | 4 | 4 | 4 | 4 | 4 | 4 |
| Polynaphthalène sulfonate de sodium | – | – | 0,2 | – | 0,2 | 0,2 | – | – |
| Polyacryalate de sodium | 0,1 | 0,1 | – | 0,1 | – | – | 0,1 | 0,1 |
| Agrafes DRAMIX® ZP 30/0,40 AISI 302 | – | 2 | – | – | – | – | – | – |
| Eau de mise en œuvre en % | 4,4 | 4,8 | 4,8 | 4,4 | 4,5 | 5 | 5 | – |
| Solution de silicate de soude à 30%, en % | – | – | – | – | – | – | – | 5,2 |
| Propriétés après séchage à 110 °C | A | B | C | D | E | F | G | H |
| Masse volumique apparente en $T/M^3$ | 3,20 | 3,20 | 3,20 | 3,27 | 3,21 | 3,26 | 3,15 | 3,25 |
| Porosité ouverte en % | 15 | 16 | 15,6 | 12,1 | 14,5 | 15,9 | 16,2 | 12,3 |
| Résistance à la flexion à la température ambiante en MPa | 5 | 5 | 5,2 | 8,3 | 4,3 | 4,6 | 4,3 | 10,6 |
| Résistance à la compression à la température ambiante en MPa | 21,6 | 20,4 | 47,4 | 77,4 | 20,6 | 29,8 | 20 | 99,6 |
| Propriétés après cuisson à 800 °C | | | | | | | | |
| Masse volumique apparente en $T/M^3$ | 3,20 | 3,20 | 3,25 | – | 3,21 | 3,24 | 3,11 | 3,21 |
| Porosité ouverte en % | 17 | 17 | 15,3 | – | 17 | 17,4 | 18,7 | 15 |
| Résistance à la flexion à la température ambiante en MPa | 4,6 | 7,3 | 5,2 | – | 3,9 | 1,7 | 2,2 | 7,8 |
| Résistance à la compression à la température ambiante en MPa | 33 | – | 52,5 | – | 30 | 16,4 | 33 | 88,7 |

Tableau I (suite)

| Propriétés après cuisson à 1600 °C | Composition % en poids | | | | | | | |
|---|---|---|---|---|---|---|---|---|
| | A | B | C | D | E | F | G | H |
| Masse volumique apparente en T/M$^3$ | 3,24 | 3,26 | 3,32 | 3,31 | 3,28 | 3,24 | 3,16 | 3,21 |
| Porosité ouverte en % | 15 | 15 | 12,7 | 11,1 | 14 | 15,9 | 16,8 | 15 |
| Résistance à la flexion à la température ambiante en MPa | 20,1 | 14,5 | 30,8 | 16,6 | 25,8 | 21,7 | 11,0 | 19,6 |
| Résistance à la compression à la température ambiante en MPa | 98,4 | 56,7 | 104,6 | 78,2 | 110,5 | 86,1 | 40,7 | 58,6 |
| Indice de Corrosion en %; selon ex. 2 (produit de référence: 100; produit de comparaison: 16) | 38 | 38 | 50 | 28 | 50 | 60 | 28 | 29 |

## Revendications

1. Une composition réfractaire non façonnée utile pour la réalisation d'articles ou pièces réfractaires destinés à la coulée et au traitement de métaux, caractérisée en ce qu'elle comprend, en poids:

a) 49 à 99% de particules d'une grosseur de 0,2 µm à 20 mm d'un matériau réfractaire fondu et coulé dont la composition chimique en poids est la suivante: 45–78% MgO, 0–30% Cr$_2$O$_3$, 0–35% Al$_2$O$_3$, 0–17% FeO et/ou Fe$_2$O$_3$, avec au moins 82% de MgO + Cr$_2$O$_3$ + Al$_2$O$_3$ + FeO + Fe$_2$O$_3$, 1–8% SiO$_2$, 0–2% CaO + BaO + SrO, 0–10% TiO$_2$, 0–3% fluor, avec la condition que la quantité de particules d'une grosseur inférieure à 45 µm n'excède pas 30% en poids,

b) 0,5 à 5% d'un liant hydraulique,

c) 0,5 à 15% de particules sensiblement sphériques choisies dans le groupe constitué par (i) jusqu'à 5% de silice vitreuse, dont au moins 80% des particules ont une grosseur supérieure à 0,2 µm et dont au moins 95% des particules ont une grosseur inférieure à 10 µm, (ii) jusqu'à 15% d'oxyde de chrome Cr$_2$O$_3$ dont au moins 80% des particules ont une grosseur supérieur à 0,2 µm et dont au moins 95% des particules ont une grosseur inférieure à 10 µm, et (iii) les mélanges de ceux-ci,

d) 0 à 50% de grains choisis parmi la chromite, la magnésie et leurs mélanges, la grosseur de ces grains étant comprise entre 10 µm et 2 mm,

e) 0,01 à 1% d'un agent tensio-actif par rapport au poids total des constituants (a) à (d), et

f) 0 à 4% d'agrafes métalliques par rapport au poids total des constituants (a) à (d).

2. Une composition selon la revendication 1, caractérisée en ce que le constituant (a) est présent à raison de 86 à 95% en poids.

3. Une composition selon la revendication 1, caractérisée en ce que le constituant (b) est présent à raison de 3–4% en poids.

4. Une composiiton selon la revendication 1, caractérisée en ce que le constituant (c) est présent à raison de 1 à 10% en poids.

5. Une composition selon la revendication 1, caractérisée en ce que le constituant (f) est présent à raison de 1 à 3% en poids.

6. Une composition selon la revendication 1, caractérisée en ce qu'elle est mise en œuvre avec addition d'une quantité d'eau comprise entre 3 et 6% en poids par rapport au poids total des constituants (a) à (f).

7. Une composition selon la revendication 1 ou 6, caractérisée en ce qu'elle est mise en œuvre avec une solution de silicate de soude correspondant à 0 à 6% d'une solution à 30% en poids de silicate de soude, cette solution de silicate de soude remplaçant tout ou partie de l'eau de mise en œuvre.

8. Articles ou pièces réfractaires produits par mise en forme, séchage et éventuellement frittage d'une composition réfractaire selon l'une quelconque des revendications 1 à 7.

9. Article ou pièce réfractaire selon la revendication 8, qui est un chenal de coulée de l'acier, produit par mise en forme, et séchage d'une composition selon la revendication 1 contenant des agrafes métalliques (f).

## Patentansprüche

1. Ungeformte feuerfeste Zusammensetzung, die für die Herstellung von feuerfesten Körpern oder Teilen, die für das Giessen oder die Behandlung von Metallen bestimmt sind, vorteilhaft ist, dadurch gekennzeichnet, dass sie, bezogen auf das Gewicht, die folgenden Bestandteile enthält:

a) 49 bis 99% Teilchen einer Grösse von 0,2 µm bis 20 mm aus einem schmelzgegossenen feuerfesten Material mit der folgenden, auf das Gewicht bezogenen chemischen Zusammensetzung: 45–78% MgO, 0–30% Cr$_2$O$_3$, 0–35% Al$_2$O$_3$, 0–17% FeO und/oder Fe$_2$O$_3$ mit wenigstens 82% MgO + Cr$_2$O$_3$ + Al$_2$O$_3$ + FeO + Fe$_2$O$_3$, 1–8% SiO$_2$, 0–2% CaO + BaO + SrO, 0–10% TiO$_2$, 0–3% Fluor mit der Massgabe, dass die Menge der Teilchen einer Grösse unter 45 µm 30 Gew.-% nicht übersteigt,

b) 0,5 bis 5% eines hydraulischen Bindemittels,

c) 0,5 bis 15% im wesentlichen kugelförmige Teilchen ausgewählt aus der Gruppe bestehend aus (I) bis 5% glasigem Siliciumdioxid, dessen Teilchen zu wenigstens 80% eine Grösse von mehr als 0,2 µm und zu wenigstens 95% eine Grösse von weniger als 10 µm haben, (II) bis zu 15% Chromoxid Cr$_2$O$_3$, dessen Teilchen zu wenigstens 80% eine Grösse von mehr als 0,2 µm und zu wenigstens 95% eine Grösse von weniger als 10 µm haben, und (III) Gemischen dieser Bestandteile,

d) 0 bis 50% Körner, die aus Chromit, Magnesiumoxid und ihren Gemischen gewählt sind, wobei die Grösse dieser Körner zwischen 10 µm und 2 mm liegt,

e) 0,01 bis 1% eines oberflächenaktiven Mittels, bezogen auf das Gesamtgewicht der Bestandteile (a) bis (d), und

f) 0 bis 4% Metallklammern, bezogen auf das Gesamtgewicht der Bestandteile (a) bis (d).

2. Zusammensetzung nach Anspruch 1, dadurch gekennzeichnet, dass der Bestandteil (a) in einer Menge von 86 bis 95 Gew.-% vorhanden ist.

3. Zusammensetzung nach Anspruch 1, dadurch gekennzeichnet, dass der Bestandteil (b) in einer Menge von 3–4 Gew.-% vorhanden ist.

4. Zusammensetzung nach Anspruch 1, dadurch gekennzeichnet, dass der Bestandteil (c) in einer Menge von 1 bis 10 Gew.-% vorhanden ist.

5. Zusammensetzung nach Anspruch 1, dadurch gekennzeichnet, dass der Bestandteil (f) in einer Menge von 1 bis 3 Gew.-% vorhanden ist.

6. Zusammensetzung nach Anspruch 1, dadurch gekennzeichnet, dass sie unter Zusatz einer Wassermenge zwischen 3 bis 6 Gew.-%, bezogen auf das Gesamtgewicht der Bestandteile (a) bis (f), angemischt wird.

7. Zusammensetzung nach Anspruch 1 oder 6, dadurch gekennzeichnet, dass sie mit einer Lösung von Natriumsilicat entsprechend 0 bis 6% einer 30 Gew.-% Natriumsilicat enthaltenden Lösung angemischt wird, wobei diese Natriumsilicatlösung das Anmischwasser ganz oder teilweise ersetzt.

8. Feuerfeste Körper oder Teile, hergestellt durch Formgebung, Trocknung und gegebenenfalls Sinterung einer feuerfesten Zusammensetzung nach irgendeinem der Ansprüche 1 bis 7.

9. Feuerfester Körper oder feuerfestes Teil nach Anspruch 8, der bzw. das eine Giessrinne für Stahl ist und hergestellt worden ist durch Formgebung und Trocknung einer Zusammensetzung nach Anspruch 1, die Metallklammern (f) enthält.

## Claims

1. An unshaped refractory composition useful for making refractors articles or parts to be used for casting or treating metals, characterized in that it comprises, by weight:

a) 49 to 99% of particles having a size from 0.2 µm to 20 mm of a fused cast refractory material having the following chemical composition by weight: 45–78% $MgO$, 0–30% $Cr_2O_3$, 0–35% $Al_2O_3$, 0–17% $FeO$ and/or $Fe_2O_3$, with at least 82% of $MgO + Cr_2O_3 + Al_2O_3 + FeO + Fe_2O_3$, 1–8% $SiO_2$, 0–2% $CaO + BaO + SrO$, 0–10% $TiO_2$, 0–3% fluorine, with the condition that the quantity of particles of a size below 45 µm does not exceed 30% by weight,

b) 0.5 to 5% of a hydraulic binder,

c) 0.5 to 15% of substantially spherical particles chosen from the group consisting of (i) up to 5% of vitreous silica, in which at least 80% of the particles have a size greater than 0.2 µm and at least 95% of the particles have a size below 10 µm, (ii) up to 15% of chromium oxide $Cr_2O_3$ in which at least 80% of the particles have a size above 0.2 µm and at least 95% of the particles have a size below 10 µm, and (iii) mixtures of these,

d) 0 to 50% of particles chosen from chromite, magnesia and their mixtures, the size of these particles being between 10 µm and 2 mm,

e) 0.01 to 1% of a surface-active agent relative to the total weight of the components (a) to (d), and

f) 0 to 4% of metal fasteners relative to the total weight of the components (a) to (d).

2. A composition as claimed in claim 1, characterized in that the component (a) is present at a concentration of 86 to 95% by weight.

3. A composition as claimed in claim 1, characterized in that the component (b) is present at a concentration of 3–4% by weight.

4. A composition as claimed in claim 1, characterized in that the component (c) is present at a concentration of 1 to 10% by weight.

5. A composition as claimed in claim 1, characterized in that the component (f) is present at a concentration of 1 to 3% by weight.

6. A composition as claimed in claim 1, characterized in that it is worked with addition of a quantity of water of between 3 and 6% by weight relative to the total weight of the components (a) to (f).

7. A composition as claimed in claim 1 or 6, characterized in that it is worked with a solution of sodium silicate corresponding to 0 to 6% of a solution containing 30% by weight of sodium silicate, this sodium silicate solution replacing all or part of the water employed.

8. Refractory articles or parts produced by shaping, drying and optionally sintering a refractory composition as claimed in any of claims 1 to 7.

9. Refrectory article or part as claimed in claim 8, which is a running trough for steel, produced by shaping and drying a composition as claimed in claim 1 containing metal fasteners (f).